# EUROPÄISCHE PATENTSCHRIFT

(11) **EP 2 608 864 B1**
(45) Veröffentlichungstag und Bekanntmachung des Hinweises auf die Patenterteilung: **10.04.2019**
(21) Anmeldenummer: 11745530.3
(22) Anmeldetag: 12.08.2011
(51) Int. Cl.: B01D 35/30, B01D 46/00

(54) **FILTER UND VERFAHREN ZUM HERSTELLEN DESSELBEN**
FILTER AND METHOD FOR PRODUCING SAME
FILTRE ET SON PROCÉDÉ DE FABRICATION

(30) Priorität: 26.08.2010 DE 102010035904
(43) Veröffentlichungstag der Anmeldung: 03.07.2013
(73) Patentinhaber: MANN+HUMMEL GmbH, 71636 Ludwigsburg (DE)
(72) Erfinder: TRAUBLINGER, Martin, 84088 Neufahrn i. NB (DE); BARTEL, Frank, 84130 Dingolfing (DE); BUCHNER, Bernd-Oliver, 84160 Frontenhausen (DE); EDER, Franz-Xaver, 94419 Reisbach (DE); BAMMERSPERGER, Ludwig, 94419 Reisbach (DE)
(74) Vertreter: Horn Kleimann Waitzhofer Patentanwälte PartG mbB
(86) Internationale Anmeldenummer: PCT/EP2011/063919
(87) Internationale Veröffentlichungsnummer: WO 2012/025405

(56) Entgegenhaltungen:
- US-A1- 2007 187 316

## Beschreibung

### Technisches Gebiet

Die vorliegende Erfindung betrifft einen Filter, insbesondere einen Betriebsmittelfilter, wie für Öl oder Kraftstoff für ein Kraftfahrzeug. Ferner wird ein Herstellungsverfahren für einen entsprechenden Filter beschrieben.

### Stand der Technik

Aus der US 2007/187316 A1 ist ein Ölfilter bekannt mit einem Filtertopf, in welchem ein Filtermedium angeordnet ist. An einer offenen Stirnseite des Filtertopfes ist ein Adapter eingesetzt, der mit einem Innengewinde versehen ist. Der Adapter weist mehrere Zahnkranzsegmente an einem Betätigungsring auf. Im eingesetzten Zustand greifen die Zahnkranzsegmente in eine Gegenverzahnung an einem Betätigungsring, der in dem Filtertopf angeordnet ist.

Andere bekannte Filter haben einen Filtertopf und einen in den Filtertopf einsetzbaren Gewindeeinsatz. In den Gewindeeinsatz ist wiederum ein Wasserschauglas oder ein Wassersammler einsetzbar. Solche Filter werden beispielsweise als Vorfilter für Dieselkraftstoff eingesetzt, denn der Einspritzdruck moderner Dieselmotoren ist in den letzten Jahren aus Verbrauchsgründen stetig angestiegen. Folglich haben die eingesetzten Einspritzanlagen sehr hohe Anforderungen an die Kraftstoffsauberkeit.

Bei der Montage des Wasserschauglases in den Gewindeeinsatz kann es auf Grund der notwendigen Drehbewegung zu einer Verdrehung zwischen dem Filtertopf und dem Gewindeeinsatz kommen.

Vor diesem Hintergrund liegt der vorliegenden Erfindung die Aufgabe zu Grunde, einen verbesserten Filter anzugeben.

### Offenbarung der Erfindung

Diese Aufgabe wird durch einen Filter gemäß Anspruch 1 gelöst.

Demgemäß wird ein Filter vorgeschlagen, welcher insbesondere ein Betriebsfilter eines Kraftfahrzeugs ist, mit einem Filtertopf und einem in den Filtertopf einsetzbaren, insbesondere ringförmigen Gewindeeinsatz. Dabei weist eine Stirnkante des Gewindeeinsatzes zumindest einen Bereich mit einer insbesondere axialen Verzahnung auf und ein Kragen des Filtertopfes weist zumindest einen dazu korrespondierenden Bereich mit einer Gegenverzahnung auf.

Die Verzahnung und die korrespondierende Gegenverzahnung bilden eine Verdrehsicherung zwischen dem Filtertopf und dem in den Filtertopf eingesetzten Gewindeeinsatz. Bei der Verdrehsicherung kann auf herkömmliche Blechlappen oder Sicken verzichtet werden. Das herkömmliche fertigungstechnische Erfordernis, dass die jeweilige Sicke nicht auf den Kragen oder Steg treffen darf, muss infolge des Einsatzes der vorliegenden Lösung, die auf die Sicken verzichten kann, nicht beachtet werden. Damit entfallen vorteilhafterweise die herkömmlichen Positionierungsmaßnahmen bei der Montage. Dadurch werden Kosten und Aufwand gesenkt.

Erfindungsgemäß sind der Kragen und die Gegenverzahnung axial in Richtung des Filtertopfinneren ausgerichtet.

In einer Ausführungsform sind der zumindest eine Bereich und der zumindest eine dazu korrespondierende Bereich derart ausgelegt, dass sie als eine Verdrehsicherung bei einem Montieren eines Gegenstückes mit einem in ein Innengewinde des Gewindeeinsatzes eingreifenden Außengewinde wirken. Das Gegenstück ist beispielsweise als ein Wasserschauglas mit einem Außengewinde ausgebildet.

Bei einer weiteren Ausführungsform hat die Stirnkante des Gewindeeinsatzes eine durchgehende Verzahnung. Infolge der Verwendung einer durchgehenden Verzahnung an der Stirnkante des Gewindeeinsatzes ist bei der Fertigungsmontage in den Filtertopf keine Positionierung notwendig.

Bei einer Variante des Filters hat der Kragen des Filtertopfes eine Anzahl von Bereichen mit der Gegenverzahnung. Der Einsatz nur einer Anzahl von Bereichen mit einer Gegenverzahnung bildet eine technisch einfache Lösung bei der Montage mit dem Gewindeeinsatz, welcher insbesondere eine durchgehende oder durchlaufende Verzahnung hat.

Bei einer weiteren Ausführungsform ist die Anzahl der Bereiche mit der Gegenverzahnung aus einem Bereich zwischen 3 und 10, bevorzugt zwischen 3 und 5, besonders bevorzugt 3. Die Anzahl von drei Bereichen mit einer Gegenverzahnung an dem Kragen des Filtertopfes hat sich als minimal notwendige Anzahl herausgestellt. Die minimale Anzahl von 3 bewirkt minimale Kosten und minimalen Aufwand bei der Fertigung.

Gemäß einer weiteren Ausführungsform ist die Höhe der Gegenverzahnung größer als die mittlere Höhe des Kragens. Dadurch ergibt sich die Möglichkeit einer serienreifen Ausformung der Zacken der Gegenverzahnung.

Erfindungsgemäß ist die Gegenverzahnung aus einem hochgezogenen Bereich des Kragens gefertigt.

Gemäß einer weiteren Ausführungsform ist der Filter als Wechselfilter, insbesondere als ein Vorfilter, Ölfilter, Kraftstofffilter oder Kraftstoffvorfilter ausgebildet.

Bei einer weiteren Ausführungsform ist eine Elementführung vorgesehen. Die Elementführung ist dazu ausgebildet, den Gewindeeinsatz gegen den Filtertopf vorzuspannen.

In einer Ausführungsform ist die Elementführung als Spannelement ausgeführt, welches insbesondere zu einer axialen Verspannung innerhalb des Filtertopfes dient. Das Spannelement kann im Filtertopf beispielsweise als insbesondere sternförmige Flachfeder aus Metall oder als Spiralfeder ausgeführt und insbesondere zwischen einem Filterelement und dem Gewindeeinsatz oder zwischen dem Deckel und dem Filterelement angeordnet sein. Alternativ kann das Spannelement in einer Endscheibe des Filterelements integriert sein.

Ferner wird ein Verfahren zum Herstellen eines Filters mit einem Filtertopf und einem in den Filtertopf einsetzbaren Gewindeeinsatz vorgeschlagen. Dabei wird eine Stirnkante des Gewindeeinsatzes mit zumindest einem Bereich mit einer Verzahnung versehen oder ausgestattet. Weiter wird ein Kragen des Filtertopfes mit zumindest einem dazu korrespondierenden Bereich mit einer Gegenverzahnung versehen oder ausgestattet.

Bei der Gegenverzahnung spricht man auch von einer zu der Verzahnung gegenläufigen Verzahnung.

In einer Ausführungsform umfasst der Filter einen Deckel zum Verschließen des Filtertopfes, wobei der Deckel einen Einlass und einen Auslass für zu filtrierende Flüssigkeit aufweist sowie ein insbesondere ringförmiges Filterelement mit vorzugsweise wasserabscheidendem Filtermedium und ein Spannelement zur axialen Verspannung, welches insbesondere zwischen Filterelement und Gewindeeinsatz angeordnet ist und das Filterelement gegen den Deckel verspannt sowie den Gewindeeinsatz gegen den Filtertopf verspannt.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte.

Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1A: eine Schnittansicht eines Ausführungsbeispiels für einen Filter;
Fig. 1B: eine Detailansicht zum Ausführungsbeispiel des Filters nach der Figur 1A;
Fig. 2A: eine Schnittansicht eines Ausführungsbeispiels eines Filtertopfes des Filters nach der Figur 1A;
Fig. 2B: eine Detailansicht zum Ausführungsbeispiel des Filtertopfes nach der Figur 2A;
Fig. 3: eine Detailansicht zum Ausführungsbeispiel des Gewindeeinsatzes nach der Figur 1A;
Fig. 4: eine Schnittansicht des Ausführungsbeispiels des Filters nach der Figur 1 und eines Gegenstückes im nicht-eingebauten Zustand;
Fig. 5: eine Schnittansicht des Ausführungsbeispiels des Filters nach der Figur 1 und des Gegenstückes im eingebauten Zustand;
Fig. 6: Verfahrenschritte für ein Ausführungsbeispiel eines Herstellungsverfahrens für einen Filter; und
Fig. 7: eine Schnittansicht eines Ausführungsbeispiels eines Filters.

In den Figuren sind gleiche oder funktionsgleiche Elemente, sofern nichts Anderes angegeben ist, mit denselben Bezugszeichen versehen worden.

### Ausführungsform(en) der Erfindung

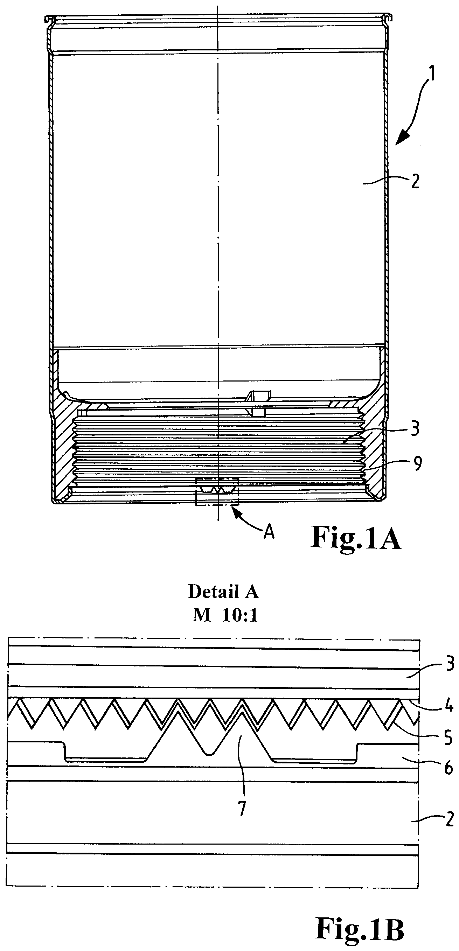

Die Figur 1A zeigt eine Schnittansicht von Teilen eines Ausführungsbeispiels für einen Filter 1.

Der Filter 1 hat einen Filtertopf 2. In den Filtertopf 2 ist ein Gewindeeinsatz 3 einsetzbar. Weitere Elemente des Filters 1 sind aus Übersichtlichkeitsgründen in Figur 1A nicht gezeigt. Der Gewindeeinsatz 3 hat ein Innengewinde 9. Zur Figur 1A zeigt die Figur 1B eine Detailansicht des Filters 1. Die Detailansicht der Figur 1B verdeutlicht, dass eine Stirnkante 4 des Gewindeeinsatzes 3 eine Verzahnung 5 hat. Die Verzahnung 5 ist insbesondere durchgehend auf der Stirnkante 4 angeordnet.

Demgegenüber hat ein Kragen 6 des Filtertopfes 2 eine Anzahl von dazu korrespondierenden Bereichen mit einer Gegenverzahnung 7. Die Verzahnung 5 des Gewindeeinsatzes 3 und die zu der Verzahnung 5 korrespondierende Gegenverzahnung 7 des Filtertopfes 2 bilden eine Verdrehsicherung zwischen dem Filtertopf 2 und dem in den Filtertopf 2 eingesetzten Gewindeeinsatz 3.

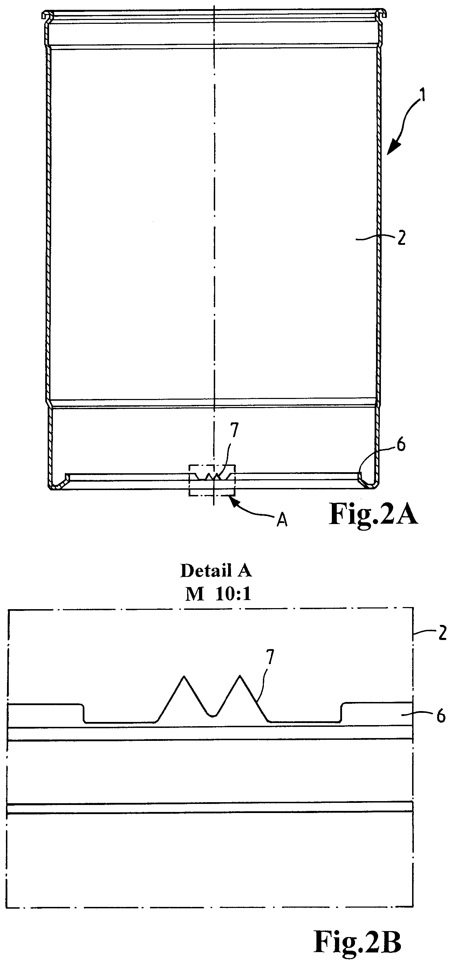

Dazu zeigt die Figur 2A eine Schnittansicht des Ausführungsbeispiels des Filtertopfes 2 des Filters 1 nach der Figur 1A. Entsprechend der Figur 1B zeigt die Figur 2B eine Detailansicht zum Ausführungsbeispiel des Filtertopfes 2 nach der Figur 2A. Insbesondere die Figur 2B verdeutlicht, dass die Höhe der Gegenverzahnung 7 größer als die mittlere Höhe des Kragens 6 ist. Dabei ist die Gegenverzahnung 7 insbesondere aus einem hochgezogenen Bereich des Kragens 6 gefertigt oder gebildet.

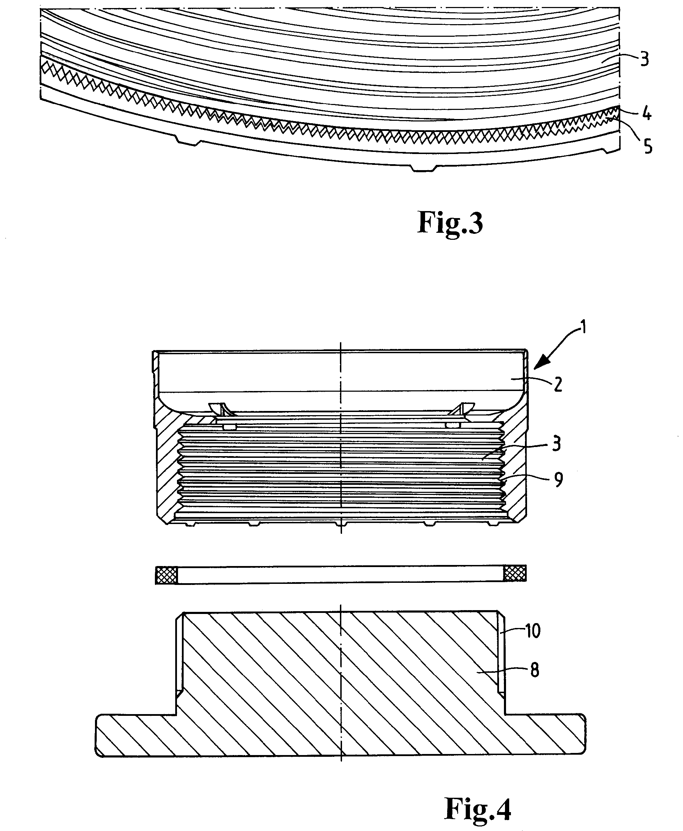

Weiter zeigt die Figur 3 eine Detailansicht zum Ausführungsbeispiel des Gewindeeinsatzes 3 nach der Figur 1A. Dabei ist die durchlaufende Verzahnung 5 an der Stirnkante 4 des Gewindeeinsatzes 3 hervorgehoben.

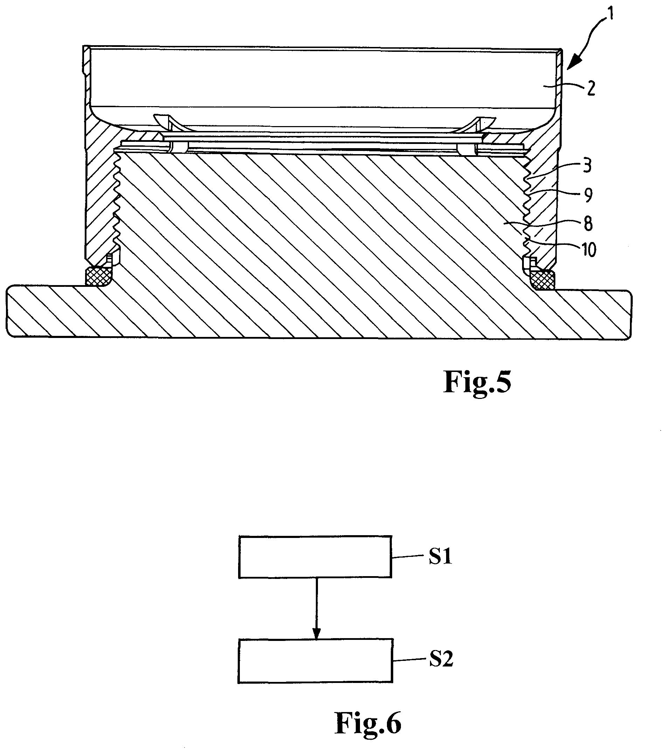

Die Figur 4 zeigt eine Schnittansicht des Ausführungsbeispiels des Filters 1 nach der Figur 1A und eines Gegenstückes 8 im nicht-eingebauten Zustand. Entsprechend zeigt die Figur 5 eine Schnittansicht des Ausführungsbeispiels des Filters nach der Figur 1A und des Gegenstückes 8 im eingebauten Zustand. Dabei sind der Bereich des Gewindeeinsatzes 3 mit der Verzahnung 5 und der dazu korrespondierende Bereich des Filtertopfes 2 mit der Gegenverzahnung 7 derart ausgelegt, dass sie als eine Verdrehsicherung bei dem Montieren des Gegenstückes 8 wirken. Bei der Montage des Gegenstückes 8 greift ein Außengewinde 10 des Gegenstückes 8 in das Innengewinde 9 des Gewindeeinsatzes 3 ein. Das Gegenstück 8 ist beispielsweise als ein Wasserschauglas ausgebildet.

Die Figur 6 zeigt Verfahrensschritte für ein Ausführungsbeispiel eines Herstellungsverfahrens für einen Filter 1 mit einem Filtertopf 2 und einem in den Filtertopf 2 einsetzbaren Gewindeeinsatz 3. Die Verfahrensschritte S1 und S2 des Verfahrens der Figur 6 werden mit Bezug zu den Figuren 1A und 1B beschrieben.

In einem Schritt S1 wird eine Stirnkante 4 des Gewindeeinsatzes 3 mit zumindest einem Bereich mit einer Verzahnung 5 versehen. In einem Schritt S2 wird ein Kragen 6 des Filtertopfes 2 mit zumindest einem dazu korrespondierenden Bereich mit einer Gegenverzahnung 7 versehen.

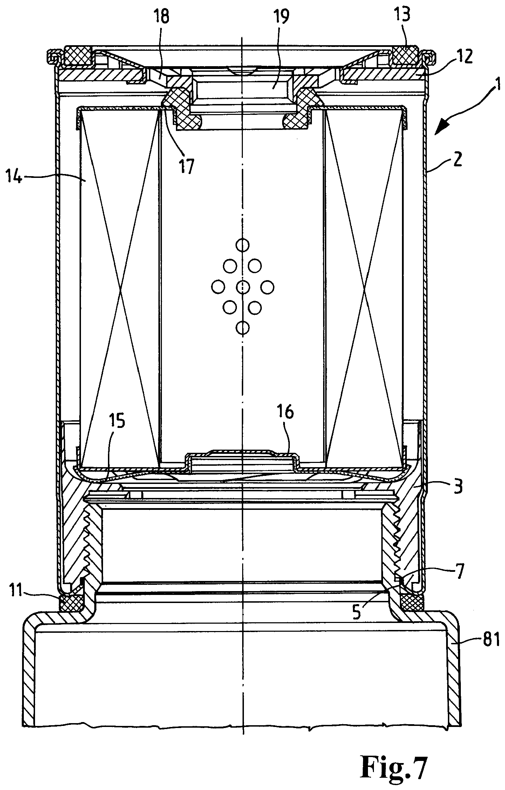

Figur 7 zeigt eine Ausgestaltung des Ausführungsbeispiels nach Figur 1A, wobei hier auch einzelne Elemente gezeigt sind, auf deren Darstellung in Figur 1A teilweise aus Übersichtsgründen verzichtet wurde. Der Filter 1 ist insbesondere als Kraftstoffwechselvorfilter mit Wasserabscheidefunktion ausgebildet und umfasst einen Filtertopf 2 und einen Deckel 12, der den Filtertopf 2 verschließt. Der Deckel 12 weist einen Einlass 18, einen Auslass 19 mit einem Anschlussgewinde und eine Deckeldichtung 13 zur Abdichtung gegenüber einem Anschlusssockel (nicht dargestellt) auf. In dem Filtertopf 2 ist ein Filterelement 14 mit wasserabscheidendem Filtermedium angeordnet, welches von außen nach innen durchströmt wird und sich mit einer offenen Endscheibe 17 mittelbar oder unmittelbar an dem Deckel 12 abstützt. Ein Spannelement 15 ist zwischen einer insbesondere geschlossenen oder mit einem Umgehungsventil (nicht gezeigt) ausgestatteten Endscheibe 16 des Filterelements 14 und dem Gewindeeinsatz 3 angeordnet und verspannt Filterelement 14 und Gewindeeinsatz 3 axial innerhalb des Filtertopfes 2. Die Verzahnung 5 des Gewindeeinsatzes 3 und die Gegenverzahnung 7 des Filtertopfes 2 greifen ineinander und bilden eine Verdrehsicherung für den Gewindeeinsatz 3 beim Einschrauben des Wassersammelbehälters 81, der gegenüber dem Filtertopf 2 mit einer Dichtung 11 abgedichtet ist.

## Patentansprüche

1. Filter (1) mit einem Filtertopf (2) und einem in den Filtertopf (2) einsetzbaren Gewindeeinsatz (3), wobei eine Stirnkante (4) des Gewindeeinsatzes (3) zumindest einen Bereich mit einer Verzahnung (5) aufweist und ein Kragen (6) des Filtertopfes (2) zumindest einen dazu korrespondierenden Bereich mit einer Gegenverzahnung (7) aufweist, wobei der Kragen und die Gegenverzahnung axial in Richtung des Filtertopfinneren ausgerichtet sind und die Gegenverzahnung (7) aus einem hochgezogenen Bereich des Kragens (6) gefertigt ist.

2. Filter (1) nach Anspruch 1, wobei der zumindest eine Bereich des Gewindeeinsatzes (3) mit der Verzahnung (5) und der zumindest einen dazu korrespondierende Bereich des Filtertopfes (2) mit der Gegenverzahnung (7) derart ausgelegt sind, dass sie als eine Verdrehsicherung bei einem Montieren eines Gegenstückes (8) mit einem in ein Innengewinde (9) des Gewindeeinsatzes (3) eingreifenden Außengewinde (10) wirken.

3. Filter (1) nach Anspruch 2, wobei das Gegenstück (8) als ein Wasserschauglas mit dem Außengewinde (10) ausgebildet ist.

4. Filter (1) nach einem der Ansprüche 1 - 3, wobei die Stirnkante (4) des Gewindeeinsatzes (3) eine durchgehende Verzahnung (5) aufweist.

5. Filter (1) nach einem der Ansprüche 1 - 4, wobei der Kragen (6) des Filtertopfes (2) eine Anzahl von Bereichen mit der Gegenverzahnung (7) hat.

6. Filter (1) nach Anspruch 5, wobei die Anzahl der Bereiche mit der Gegenverzahnung (7) aus einem Bereich zwischen 3 und 10, bevorzugt zwischen 3 und 5, besonders bevorzugt 3 ist.

7. Filter (1) nach einem der Ansprüche 1 - 6, wobei die Höhe der Gegenverzahnung (7) größer als die mittlere Höhe des Kragens (2) ist.

8. Filter (1) nach einem der Ansprüche 1 - 7, ferner mit einem Deckel (12), der den Filtertopf (2) verschließt, wobei der Deckel (12) einen Einlass (18), einen Auslass (19) mit einem Anschlussgewinde und eine Deckeldichtung (13) zur Abdichtung gegenüber einem Anschlusssockel aufweist.

9. Filter (1) nach einem der Ansprüche 1 - 8, wobei der Filter (1) als ein Vorfilter, als ein Ölfilter oder als ein Kraftstoffwechselfilter ausgebildet ist.

10. Filter (1) nach einem der Ansprüche 1 - 9, wobei eine Elementführung vorgesehen ist, welche dazu eingerichtet ist, den Gewindeeinsatz (3) gegen den Filtertopf (2) zu verspannen.

11. Verfahren zum Herstellen eines Filters (1) mit einem Filtertopf (2) und einem in den Filtertopf (2) einsetzbaren Gewindeeinsatz (3) nach einem der Ansprüche 1 - 10, bei dem eine Stirnkante (4) des Gewindeeinsatzes (3) mit zumindest einem Bereich mit einer Verzahnung (5) versehen wird und ein Kragen (6) des Filtertopfes (2) mit zumindest einem dazu korrespondierenden Bereich mit einer Gegenverzahnung (7) versehen wird.

## Claims

1. Filter (1) having a filter pot (2) and a threaded insert (3) which can be inserted into the filter pot (2), an end edge (4) of the threaded insert (3) having at least one region with a toothing system (5), and a collar (6) of the filter pot (2) having at least one region which corresponds thereto with a mating toothing system (7), the collar and the mating toothing system being oriented axially in the direction of the filter pot interior, and the mating toothing system (7) being manufactured from a drawn-up region of the collar (6).

2. Filter (1) according to claim 1, the at least one region of the threaded insert (3) with the toothing system (5) and the at least one corresponding region of the filter pot (2) with the mating toothing system (7) being designed in such a way that they act as an anti-rotation safeguard during mounting of a counterpiece (8) with an external thread (10) which engages into an internal thread (9) of the threaded insert (3).

3. Filter (1) according to claim 2, the counterpiece (8) being configured as a water inspection glass with the external thread (10).

4. Filter (1) according to one of claims 1 to 3, the end edge (4) of the threaded insert (3) having a continuous toothing system (5).

5. Filter (1) according to one of claims 1 to 4, the collar (6) of the filter part (2) having a number of regions with the mating toothing system (7).

6. Filter (1) according to claim 5, the number of regions with the mating toothing system (7) being from a range between 3 and 10, preferably between 3 and 5, particularly preferably 3.

7. Filter (1) according to one of claims 1 to 6, the height of the mating toothing system (7) being greater than the mean height of the collar (2).

8. Filter (1) according to one of claims 1 to 7, having, furthermore, a cover (12) which closes the filter pot (2), the cover (12) having an inlet (18), an outlet (19) with a connector thread, and a cover seal (13) for sealing with respect to a connector base.

9. Filter (1) according to one of claims 1 to 8, the filter (1) being configured as a prefilter, as an oil filter or as an exchangeable fuel filter.

10. Filter (1) according to one of claims 1 to 9, and element guide being provided which is set up to brace the threaded insert (3) against the filter part (2).

11. Method for producing a filter (1) with a filter pot (2) and a threaded insert (3) which can be inserted into the filter pot (2) according to one of claims 1 to 10, in which method an end edge (4) of the threaded insert (3) is provided with at least one region with a toothing system (5), and a collar (6) of the filter pot (2) is provided with at least one corresponding region with a mating toothing system (7).

## Revendications

1. Filtre (1) avec un pot de filtre (2) et un insert fileté (3) insérable dans le pot de filtre (2), dans lequel une arête frontale (4) de l'insert fileté (3) présente au moins une région avec une denture (5) et un rebord (6) du pot de filtre (2) présente au moins une région correspondant à celle-ci avec une denture opposée (7), dans lequel le rebord et la denture opposée sont orientés axialement en direction de l'intérieur du pot de filtre et la denture opposée (7) est fabriquée à partir d'une région surélevée du rebord (6).

2. Filtre (1) selon la revendication 1, dans lequel ladite au moins une région de l'insert fileté (3) avec la denture (5) et ladite au moins une région du pot de filtre (2) correspondant à celle-ci avec la denture opposée (7) sont conçues de telle manière qu'elles agissent comme une protection contre la rotation lors d'un montage d'une pièce opposée (8) avec un filet extérieur (10) s'engageant dans un filet intérieur (9) de l'insert fileté (3).

3. Filtre (1) selon la revendication 2, dans lequel la pièce opposée (8) est réalisée sous forme de hublot d'eau avec le filet extérieur (10).

4. Filtre (1) selon l'une quelconque des revendications 1 à 3, dans lequel l'arête frontale (4) de l'insert fileté (3) présente une denture continue (5).

5. Filtre (1) selon l'une quelconque des revendications 1 à 4, dans lequel le rebord (6) du pot de filtre (2) comporte un nombre de régions avec la denture opposée (7).

6. Filtre (1) selon la revendication 5, dans lequel le nombre des régions avec la denture opposée (7) se situe dans une plage comprise entre 3 et 10, de préférence entre 3 et 5, en particulier vaut de préférence 3.

7. Filtre (1) selon l'une quelconque des revendications 1 à 6, dans lequel la hauteur de la denture opposée (7) est plus grande que la hauteur moyenne du rebord (2).

8. Filtre (1) selon l'une quelconque des revendications 1 à 7, en outre avec un couvercle (12), qui ferme le pot de filtre (2), dans lequel le couvercle (12) présente une entrée (18), une sortie (19) avec un filet de raccordement et un joint de couvercle (13) pour l'étanchéité par rapport à un socle de raccordement.

9. Filtre (1) selon l'une quelconque des revendications 1 à 8, dans lequel le filtre (1) est réalisé sous forme de préfiltre, de filtre à huile ou de filtre interchangeable à carburant.

10. Filtre (1) selon l'une quelconque des revendications 1 à 9, dans lequel il est prévu un élément de guidage, qui est conçu pour serrer l'insert fileté (3) contre le pot de filtre (2).

11. Procédé de fabrication d'un filtre (1) avec un pot de filtre (2) et un insert fileté (3) insérable dans le pot de filtre (2) selon l'une quelconque des revendications 1 à 10, dans lequel une arête frontale (4) de l'insert fileté (3) est dotée d'au moins une région avec une denture (5) et un rebord (6) du pot de filtre (2) est doté d'au moins une région correspondant à celle-ci avec une denture opposée (7).
